(19) Europäisches Patentamt
European Patent Office
Office européen des brevets

(11) EP 2 722 650 A1

(12) **EUROPEAN PATENT APPLICATION**

(43) Date of publication:
23.04.2014 Bulletin 2014/17

(51) Int Cl.:
*G01D 5/34* (2006.01)

(21) Application number: 12189086.7

(22) Date of filing: 18.10.2012

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: Lambda-X
1400 Nivelles (BE)

(72) Inventors:
• Monnom, Olivier
1450 Cortil-Noirmont (BE)
• Beghuin, Didier
1540 Herne (BE)

(74) Representative: Mackett, Margaret Dawn et al
Gevers Patents
Holidaystraat 5
1831 Diegem (BE)

(54) **Angular position sensing**

(57) Described herein is an angular position sensing system (100) and method for determining the angular position of a punctual radiating source (130) with respect to a linear sensor element (110). The linear sensor element (110) having a surface (115) comprising a discrete set of pixels. A periodic grating (120) is provided over the surface (115) of the linear sensor element (110) and the output from each pixel in the discrete set of pixels produces a periodic output signal (140), the phase of which is representative of an angle ($\alpha$) of radiation from the radiating source (130) with respect to the linear sensor element (110). The periodic output signal (140) is processed in the analogue domain to provide quadrature output signals (190, 195).

*Fig. 1*

EP 2 722 650 A1

## Description

Field of the Invention

The present invention relates to angular position sensing and is more particularly concerned with determining the angular position of a radiating source with respect to a reference position.

Background to the Invention

Position determining systems are known in which the direction of incident light can be determined. One such system is described in US-A-5499098 where a pixel array forms a light-receiving region and provides outputs signals according to the light detected by the array. A pattern member having a predetermined characteristic is arranged in front of the pixel array so that the direction of the incident light can be determined. Light is incident on the pattern member such that the shadow it creates is perpendicular to the pixel array. The characteristic includes a digital code with coordinate information. Signal processing means are provided for processing the extracted information, including the digital code, on the basis of the output signals. All processing is carried out in the digital domain.

This system provides the angular position by a method that does not make use of the densest pattern possible with the result that some of the pixels do not contribute to the angular accuracy. In addition, the digital processing must be as fast as the clock speed of the linear sensor.

Summary of the Invention

It is therefore an object of the present invention to provide a simple method of determining the angular position of a sensor surface relative to a radiating source, and in particular, a punctual radiating source.

In accordance with a first aspect of the present invention, there is provided an angular position sensor for sensing the angular position of a radiating source relative thereto, the sensor comprising:-

  a linear sensor element including a discrete set of pixels, the linear sensor element providing output signal in accordance with radiation incident on the discrete set of pixels at a pixel clock rate;
  a periodic grating associated with the linear sensor element and through which radiation is incident on the discrete set of pixels of the linear sensor element; and
  an electronic demodulator for demodulating the output signal to provide phase information representative of an angle at which radiation from the radiating source is incident on the linear sensor element.

Advantageously, due to the periodicity of the output signal, the output signal can be processed directly in the analogue domain without the need for complex circuitry and expensive digital or analog processing circuitry.

Preferably, the angular position sensor may further comprises an electronic sequential read-out for reading out the response of each pixel in the discrete set of pixels to the incident radiation at the pixel clock rate and transferring the response to the electronic demodulator.

The periodic grating may comprise a periodic phase grating or a periodic amplitude grating.

The electronic demodulator preferably comprises a quadrature demodulator providing in-phase and quadrature component signals.

A reference carrier signal is used for demodulation of the periodic output signal, the reference carrier signal having a frequency that is related to the frequency of the periodic output signal from the discrete set of pixels of the linear sensor element. In a preferred embodiment, the frequency of the reference carrier signal is equal to the frequency of the periodic output signal from the discrete set of pixels of the linear sensor element.

The angular position sensor preferably further comprises angular resolution means for resolving angle indecisiveness of the determined angle. As the angular determination is obtained from the phase of the periodic output signal, there may be a phase indecisiveness of $2\pi$ which needs to be resolved to recover the correct angular position.

The angular resolution means may comprise a pointing element directed at the radiating source to obtain an estimate of the angle to be determined. Alternatively, the angular resolution means may comprise at least one additional periodic grating having a different frequency arranged over at least a portion of the linear sensor element.

The angular position sensor further comprises a digital processor for determining the angular position of the radiating source from the demodulated output signals. In one embodiment, the digital processor operates at a lower rate than the pixel clock rate at which the output signals are read out from the linear sensor element.

In a preferred embodiment, the linear sensor element comprises an optical linear sensor.

In accordance with another aspect of the present invention, there is provided a method of determining the angular position of a radiating source with respect to a linear sensor element, the linear sensor element including a discrete set of pixels and a periodic grating arranged over the discrete set of pixels, the method comprising the steps of:-

  a) illuminating the linear sensor element with the radiating source;
  b) reading out a periodic signal from the discrete set of pixels of the linear sensor element at a pixel clock rate;
  c) demodulating the periodic signal to provide in-phase and quadrature component signals indicative of the angular position of the radiating source with respect to the linear sensor element.

Step c) preferably comprises demodulating the periodic output signal with a reference carrier signal. The reference carrier signal may have a frequency which is related to the pixel clock rate. Preferably, the reference carrier signal frequency is equal to the frequency of the periodic output signal.

Preferably, the method further comprises resolving angle indecisiveness of the determined angle.

Brief Description of the Drawings

For a better understanding of the present invention, reference will now be made, by way of example only, to the accompanying drawing in which:-

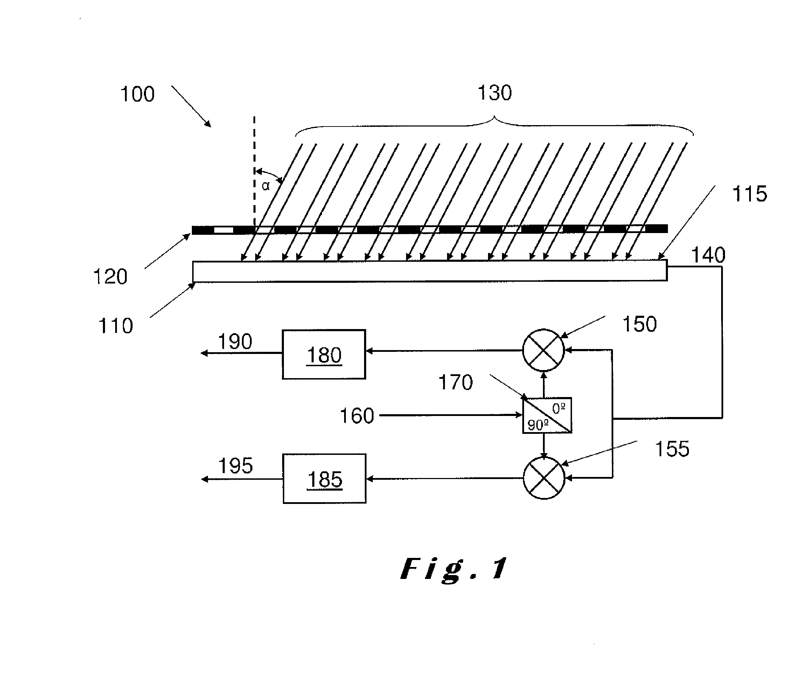

Figure 1 illustrates an angular position sensor in accordance with the present invention.

Description of the Invention

The present invention will be described with respect to particular embodiments and with reference to certain drawings but the invention is not limited thereto. The drawings described are only schematic and are non-limiting. In the drawings, the size of some of the elements may be exaggerated and not drawn on scale for illustrative purposes.

It will be understood that the terms "vertical" and "horizontal" are used herein refer to particular orientations of the Figures and these terms are not limitations to the specific embodiments described herein.

The present invention relates to apparatus and a method for recovering the angular position of a punctual radiating source relative to an optical linear sensor surface which operates in a simple and fast continuous way. A periodic grating is placed over the optical linear sensor surface and the radiation from a far, punctual radiating source passes through the grating and is incident on the sensor surface to form a periodic frame thereon.

The term "punctual radiating source" as used herein refers to radiation emitted by a radiating source whose geometric projection on the linear sensor element through a pinhole set at the same distance from the linear sensor element as the periodic grating is less than one grating period.

Although the present invention will be described below with reference to an optical sensor and the determination of the angular position of a light radiating source, it will be appreciated that the invention may also be used with other forms of radiation.

In known processing systems, the read-out rate from the sensor is matched to the processing speed of the subsequent processing circuitry. The present invention has the advantage that the read-out rate is decoupled from the processing speed of subsequent processing circuitry. This results in higher read-out rates which can be processed at lower speeds in the subsequent processing circuitry.

Figure 1 illustrates an angular position sensing system 100 in accordance with the present invention. The system 100 comprises a linear sensor element 110 having a sensor surface 115 comprising a discrete set of pixels. A periodic grating 120 is arranged over the sensor surface 115. Light 130 from a distant punctual light source is incident on the periodic grating 120 and passes through the periodic grating 120 and onto the discrete set of pixels forming the sensor surface 115 of the linear sensor element 110. Analogue signal 140 relating to the light incident on the sensor surface 115 is output from the sensor element 110 as a periodic temporal signal and is demodulated in an analogue quadrature demodulator as will be described in more detail below.

The grating can be constructed of periodic alternating transmittance (transmission grating) or it can be constructed of periodic alternating optical path length variations (phase grating). Transmission gratings can be produced by reflective or absorptive means coated or embedded in transparent material. Phase grating can be produced by structuring one or two surfaces of transparent material or by periodically changing the refractive index of a material of constant thickness.

Light passing through the periodic grating 120 to the discrete set of pixels of the sensor surface 115 of the linear sensor element 110 provides a periodic amplitude signal. The phase of this periodic amplitude signal is determined by the fixed geometry of the discrete set of pixels forming the sensor surface 115 and the periodic grating 120, and also by the angle between the sensor surface 115 of the sensor element 110 and the radiating source 130. As shown in Figure 1, light 130 from the distant light source makes an angle $\alpha$ with respect to a normal to the surface of the sensor element 110.

The optical linear sensor element 110 outputs a periodic signal 140 whose amplitude is related to the periodic grating. The periodicity of the grating affects the amplitude frequency for a given pixel clock rate as will be described in more detail below. This amplitude of the periodic signal is demodulated in order to determine the phase of the signal. The phase of the periodic signal is directly related to the phase shift of the periodic grating on the discrete set of pixels of the sensor surface 115 of the sensor element 110.

The output signal rate or frequency is related to an external clock, for example, a pixel clock (not shown) which controls the sequential read-out of the analogue value of each pixel in the discrete set of pixels forming the sensor surface 115 at the pixel clock rate. A typical pixel clock rate is 10MHz, but other frequencies of the pixel clock rates can be utilised in accordance with the processing electronics. The phase shift of the temporal output signal is then related to the angle $\alpha$. The analogue signal 140 is directly demodulated using an analogue demodulation circuit. As the analogue signal 140 is periodic, its phase can be determined by mixing the analogue signal 140 with a reference carrier signal 160.

If the period, $P_g$, of the periodic grating is expressed in terms of a pixel number (a real number), and the rate at which the values of the pixels of the discrete set of pixels are readout from the linear sensor, that is, the pixel clock rate, $F_p$, the frequency, $F_o$, of the periodic output signal is equal to the ratio of the pixel clock rate divided by the period of the periodic grating, namely, $F_p/P_g$.

In one embodiment, the frequency of the reference carrier signal 160 may be equal to the frequency of the analogue output signal 140.

As shown in Figure 1, the analogue signals 140 are input to analogue mixing elements 150, 155 and mixed with respective in-phase and quadrature reference components derived from the reference carrier signal 160 in a phase shifting module 170 which supplies the in-phase signal at 0° and the quadrature signal at 90° to respective mixing element 150, 155. After mixing, the output from each mixing element 150, 155 passes through respective low pass filters 180, 185 to provide output signals 190, 195 which are related to the angle $\alpha$. The in-phase signal 190 can be represented as $I(\alpha)$ and the quadrature signal 195 can be represented as $Q(\alpha)$. This demodulation method is well known in the field of telecommunications, and it is often termed "analogue quadrature amplitude demodulation (QAM)".

The demodulated in-phase and quadrature signals 190, 195 are processed in a processor (not shown) using digital techniques as it is well known but at a rate that is lower than the pixel clock rate, typically at a processing rate hundreds of times smaller than the pixel clock rate. This means that the read-out rate is no longer linked to the pixel clock rate and has the advantage that processing of the demodulated signals can be carried out in the digital domain using simple and inexpensive digital circuitry.

As the angular determination is determined from the phase of the periodic output signal 140, there may be an uncertainty or indecisiveness in the angular determination depending on the periodicity of the grating used and its position with respect to the radiating source whose angle is to be determined. This phase uncertainty or indecisiveness can be multiples of $2\pi$ and therefore needs to be resolved to provide an accurate angular determination from the phase of the periodic output signal 140.

This phase uncertainty or indecisiveness can be resolved by using a pointing element directed at the radiating source to obtain an estimate of the angle, this estimate being used to resolve the phase uncertainty or indecisiveness to provide an accurate determined angle using a low accuracy system. One such method for determining the angular offset of a pinpoint radiant source is described in US-A-4946277.

In US-A-4946277, a four-quadrant plane detector is disclosed which is housed in a housing to protect the detector from ambient radiation. A diaphragm is placed in a plane parallel to the detector within the housing and has a transparent aperture aligned with a window in the housing. Light from a distant source passes through the window and the diaphragm before being incident on the detector. The incident light is processed in accordance with the quadrant(s) on which it is incident. Output signals from the detector are processed to determine the location of the incident light relative to the centre of the detector and hence the angular offset of the pinpoint radiant source.

Resolving the indecisiveness can be implemented by either using any relatively low accuracy means such as the one disclosed in US-A-4946277 to obtain an estimate of the angle to be determined. In this case, the estimate of the angular position should be such that its accuracy is better than a phase variation of $\pi$ of the periodic output signal.

The effective angle, $\alpha$, can be expressed as:

$$\alpha = g(2n\pi + \varphi)$$

where g is a function obtained from the angular sensor calibration and ($\varphi$ is the phase of the signal and n is an integer ranging from $n_{min}$ to $n_{max}$. $n_{min}$ is the minimum (typically negative) number of periods departing from 0 (corresponding to normal incidence) for which the system is calibrated, and $n_{max}$ is the maximum number of periods (typically positive) for which the system is calibrated. The processing of the demodulation signal provides an accurate value of $\varphi$). If an approximate angle is known from an external system, $\alpha_a$, it is thus possible to determine the parameter n by minimising the function below with respect to n:-

$$|\alpha_a - g(2n\pi + \varphi)|$$

An accurate evaluation of $\alpha$ is thus obtained from $g(2n\pi + \varphi)$, where n is obtained from the minimisation process. g is the function linking the phase to the effective angle $\alpha$ as obtained from a calibration process.

Alternatively, at least one additional periodic grating having a different frequency may be used. For each additional periodic grating having a different frequency, an additional demodulator is required which uses the reference frequency that is related to the associated periodic grating.

In one embodiment, a single linear sensor element may comprise two periodic gratings in which each grating has its own distinct frequency. In this case, each or the two periodic gratings has an associated discrete set of pixels. In this case, two outputs are provided from the linear sensor element, one for each discrete set of pixels and each output is passed to a dedicated demodulator having a reference carrier frequency at related to the associated periodic grating as described above.

In another embodiment, two separate linear sensor elements may be used, each linear sensor element having it own distinct periodic grating. The output from each sensor element is passed to a dedicated demodulator and the demodulated signals are combined to determine the phase of the incoming radiation. The two linear sensor elements may be arranged side by side, orthogonally with respect to one another, or in any other suitable configuration. In this case, the processing of the demodulated signal should have a phase accuracy, $\Delta$, to resolve the phase indecisiveness over the phases of the two analogue signals better than $\Delta_{mn}/2$, where

$$\Delta_{mn} = n/f_1 - m/f_2$$

for $1 < n < n_{max}$ and $1 < m < m_{max}$, where $f_1$ and $f_2$ are the reduced signal frequencies $F_c$ for grating 1 and for grating 2 respectively divided by the pixel clock rate ($F_p$), $n_{max}$ determines the maximum number of periods seen from a single pixel for grating 1 when the light source goes from a minimum angle to a maximum angle in absolute terms and $m_{max}$ the maximum number of periods seen from a single pixel for grating 2 when the light source goes from a minimum angle to a maximum angle in absolute terms, that is, the angular dynamic range for each of the two gratings. In other words, the angular dynamic range is the maximum angle divided by the angular resolution. The n and m values are determined by minimising the function below over n and m:

$$|g_1(n/f_1 + \varphi_1) - g_2(m/f_2 + \varphi_2)|$$

for $0 < n < n_{max}$ and $0 < m < m_{max}$, where $g_1$ and $g_2$ are functions respectively derived from the calibration of the signal issued from the grating 1 and grating 2. The angle $\alpha$ is evaluated from a combination of the two values $g_1(n/f_1 + \varphi_1)$ and $g_2(m/f_2 + \varphi_2)$, for example, by simple averaging:

$$[g_1(n/f_1 + \varphi_1) + g_2(m/f_2 + \varphi_2)]/2$$

In one embodiment, the second or additional linear sensor element may simply comprise a second periodic grating arranged over a portion of the first or main linear sensor element so that a second periodic amplitude signal is generated for the second periodic grating. In this case, the processing of the demodulated signals is adapted to process both periodic amplitude signals and to compare them to resolve the uncertainty or indecisiveness of the determined angle for the radiating source 130. In this embodiment, only one discrete set of pixels is required and therefore incurs no substantial additional cost.

Although the angular sensor has been described above with reference to determining the unknown angular position of a radiating source, the processing of the output signal as described above can also be used for determining lateral displacement or translation of the periodic grating relative to the discrete set of pixels if the position of radiating source is fixed in space with respect to the linear array of pixels. In this case, translation of the periodic grating relative to the discrete set of pixels provides phase information that is indicative of the direction of movement of the periodic grating and of its position.

Whilst the present invention has been described with reference to a specific embodiment, it will readily be understood that other embodiments are also possible.

**Claims**

1. An angular position sensor (100) for sensing the angular position of a radiating source relative thereto, the sensor comprising:-

   a linear sensor element (110, 115) including a discrete set of pixels, the linear sensor element (110, 115) providing output signals (140) in accordance with radiation (130) incident on the discrete set of pixels at a pixel clock rate;
   a periodic grating (120) associated with the linear sensor element (110, 115) and through which radiation is incident on the discrete set of pixels of the linear sensor element (110, 115); and
   an electronic demodulator (150, 155, 160, 170, 180, 185) for demodulating the output signal (140) to provide phase information representative of an angle ($\alpha$) at which radiation (130) from the radiating source is incident on the linear sensor element (110, 115).

2. An angular position sensor according to claim 1, further comprising an electronic sequential read-out for reading out the response of each pixel in the discrete set of pixels to the incident radiation at the pixel clock rate and transferring the response to the electronic demodulator.

3. An angular position sensor according to claim 1 or 2, wherein the electronic demodulator comprises a quadrature demodulator (150, 155, 160, 170, 180, 185) providing in-phase and quadrature component signals.

4. An angular position sensor according to claim 3 wherein the quadrature demodulator (150, 155, 160, 170, 180, 185) utilises a reference carrier signal (160), the reference carrier signal (160) having a frequency that is equal to the frequency of the read-out rate of the output signal (140) from the discrete set of pixels of the linear sensor element (110, 115).

5. An angular position sensor according to any one of the preceding claims, further comprising angular resolution means for resolving angle indecisiveness of the determined angle ($\alpha$).

6. An angular position sensor according to claim 5, wherein the angular resolution means comprises a pointing element directed at the radiating source to obtain an estimate of the angle ($\alpha$) to be determined.

7. An angular position sensor according to claim 5, wherein the angular resolution means comprises at least one additional periodic grating having a different frequency arranged over at least a portion of the linear sensor element (110, 115).

8. An angular position sensor according to any one of the preceding claims, further comprising a digital processor for determining the angular position of the radiating source from the demodulated output signals (190, 195).

9. An angular position sensor according to claim 8, wherein the digital processor operates at a lower rate than the pixel clock rate at which the output signals are read out from the linear sensor element (110, 115).

10. A method of determining the angular position of a radiating source with respect to a linear sensor element (110, 115), the linear sensor element including a discrete set of pixels and a periodic grating (120) arranged over the discrete set of pixels, the method comprising the steps of:-

    a) illuminating the linear sensor element (110, 115) with the radiating source;
    b) reading out a periodic output signal (140) from each pixel of the discrete set of pixels of the linear sensor element (110, 115) at a pixel clock rate; and
    c) demodulating the periodic output signal (140) to provide in-phase and quadrature component signals indicative of the angular position of the radiating source with respect to the linear sensor element (110, 115).

11. A method according to claim 10, wherein step c) comprises demodulating the periodic output signal (140) with a reference carrier signal (160) having a frequency which is related to the pixel clock rate.

12. A method according to claim 11, wherein the reference carrier signal (160) has a frequency that is equal to the frequency of the periodic output signal (140).

13. A method according to any one of claims 10 to 12, further comprising resolving angle indecisiveness of the determined angle.

Fig. 1

Europäisches
Patentamt

European
Patent Office

Office européen
des brevets

**EUROPEAN SEARCH REPORT**

Application Number

EP 12 18 9086

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 01/38828 A1 (HEIDENHAIN GMBH DR JOHANNES [DE]; TONDORF SEBASTIAN [DE]; THIEL JUERGE) 31 May 2001 (2001-05-31)<br>* abstract; figures 1, 3 *<br>* page 16, line 13 - line 26 *<br>----- | 1-13 | INV.<br>G01D5/34 |
| X | EP 0 331 353 A2 (CAMPBELL ALLAN JAMES DONALD) 6 September 1989 (1989-09-06)<br>* abstract; figure 1 *<br>----- | 1 | |
| A | EP 1 081 457 A2 (HEIDENHAIN GMBH DR JOHANNES [DE]) 7 March 2001 (2001-03-07)<br>* paragraph [0005] *<br>----- | 7 | |

TECHNICAL FIELDS
SEARCHED (IPC)

G01D

The present search report has been drawn up for all claims

| Place of search | Date of completion of the search | Examiner |
|---|---|---|
| Munich | 26 February 2013 | Flierl, Patrik |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.                    EP 12 18 9086

This annex lists the patent family members relating to the patent documents cited in the above-mentioned European search report.
The members are as contained in the European Patent Office EDP file on
The European Patent Office is in no way liable for these particulars which are merely given for the purpose of information.

26-02-2013

| Patent document cited in search report | | Publication date | Patent family member(s) | | Publication date |
|---|---|---|---|---|---|
| WO 0138828 | A1 | 31-05-2001 | AT | 322667 T | 15-04-2006 |
| | | | DE | 19956912 A1 | 09-08-2001 |
| | | | EP | 1236023 A1 | 04-09-2002 |
| | | | JP | 4503902 B2 | 14-07-2010 |
| | | | JP | 2003515153 A | 22-04-2003 |
| | | | US | 6995836 B1 | 07-02-2006 |
| | | | WO | 0138828 A1 | 31-05-2001 |
| EP 0331353 | A2 | 06-09-1989 | EP | 0331353 A2 | 06-09-1989 |
| | | | GB | 2215159 A | 13-09-1989 |
| EP 1081457 | A2 | 07-03-2001 | AT | 398764 T | 15-07-2008 |
| | | | DE | 19941318 A1 | 15-03-2001 |
| | | | EP | 1081457 A2 | 07-03-2001 |
| | | | ES | 2307478 T3 | 01-12-2008 |
| | | | JP | 4503799 B2 | 14-07-2010 |
| | | | JP | 2001082984 A | 30-03-2001 |
| | | | US | 6541761 B1 | 01-04-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5499098 A

- US 4946277 A